# NEUE EUROPÄISCHE PATENTSCHRIFT

(11) **EP 1 640 201 B2**
(45) Veröffentlichungstag und Bekanntmachung des Hinweises auf die Entscheidung über den Einspruch: **02.09.2015**
(45) Hinweis auf die Patenterteilung: 30.04.2008
(21) Anmeldenummer: 05020755.4
(22) Anmeldetag: 23.09.2005
(51) Int. Cl.: B60K 5/08, A01D 69/00, A01D 43/08

(54) **Selbstfahrende Erntemaschine**
Self-propelled harvester
Moissonneuse automotrice

(30) Priorität: 24.09.2004 DE 102004046467
(43) Veröffentlichungstag der Anmeldung: 29.03.2006
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)
(74) Vertreter: Busse & Busse

(56) Entgegenhaltungen:
- DE-A- 3 644 767
- DE-A1- 4 210 258
- DE-U1- 20 007 994
- GB-A- 546 237
- 'RAUCH KOMET50BEDIENUNGSANLEITUNG', 1991
- 'AUSZUG AUS RAUCH PREISLISTE', November 1993
- 'RAUCH ZEICHNUNG FREILAUF', 13 Januar 1993
- 'AUSZUG AUS RAUCH PREISLISTE', Mai 1995

## Beschreibung

Die Erfindung bezieht sich auf eine selbstfahrende Erntemaschine, insbesondere einen Feldhäcksler zum Aufnehmen und Häckseln von Erntegut wie Mais, Grüngut oder dergleichen.

Durch immer größere, zusammen hängende Anbauflächen, die in immer kürzerer Zeit mit möglichst wenig Personalaufwand bearbeitet oder abgeerntet werden sollen, ist der Trend zu leistungsfähigen selbstfahrenden landwirtschaftlichen Erntemaschinen in vielen Bereichen ungebrochen. All diese Maschinen haben einige besondere gemeinsame Merkmale. Aufgrund der hohen Komplexität derartiger Maschinen ist ihr Anschaffungspreis hoch. Damit sich ein solcher Anschaffungspreis amortisiert, muss die Leistungsfähigkeit weiter gesteigert werden. So werden beispielsweise die Arbeitsbreiten von Erntevorsätzen vergrößert und die Durchsatzleistungen von Dresch- oder Häckselaggregaten gesteigert. Des weiteren wird für die Straßenfahrt solcher Maschinen eine möglichst hohe zulässige Fahrgeschwindigkeit angestrebt, um einen schnellen Standortwechsel zu ermöglichen. All diesen Entwicklungen sind jedoch Grenzen gesetzt, die u.a. durch das technisch Machbare oder auch durch gesetzliche Vorschriften bestimmt sein können, wobei es allerdings gilt, diese möglichst kostensparend durch intelligente technische Lösungen oder durch technischen Aufwand zu erfüllen bzw. auch Grenzen zu beseitigen.

Aus der DE 200 07 994 U1 ist eine selbstfahrende Erntemaschine mit einem Vorsatzgerät großer Arbeitsbreite bekannt. Diese Druckschrift befasst sich mit dem Problem der Verkehrssicherheit bei einer Straßenfahrt mit hoher Geschwindigkeit. Dabei haben sämtliche Bestandteile der Erntemaschine eine Anordnung zueinander, bei der der Schwerpunkt der betriebsbereiten Gesamtmaschine einschließlich eines Vorsatzgerätes in Fahrtrichtung in einem bestimmten Abstand hinter der Vorderachse und dabei in einer bestimmten Höhe über der Bodenebene gelegen ist. Damit soll sichergestellt sein, dass auch bei hohen Fahrgeschwindigkeiten mit angebautem Vorsatzgerät die Maschine sicher beherrschbar bleibt und insbesondere unter allen Betriebszuständen die Betriebssicherheit gewährleistet ist. Auch bei Bremsvorgängen bleibt die Lenkbarkeit der betriebsbereiten Maschine bis hin zu Höchstgeschwindigkeiten von etwa 40 km/h selbst bei unebenem Untergrund und einer hohen Gesamtmasse der Maschine erhalten.

Um beispielsweise die volle Leistungsfähigkeit eines Feldhäckslers der Oberklasse aus dem Stand der Technik ausschöpfen zu können, sind mittlerweile Motorleistungen von über 500 kW installiert. Derart großvolumige, leistungsstarke Motoren sind jedoch keine Großserienmotoren und verteuern dadurch die Herstellungskosten der Gesamtmaschine ganz erheblich. Des weiteren wirken sich zunehmende Motorgrößen auch zunehmend nachteilig auf die Umweltbelastung und auf die Wirtschaftlichkeit der Arbeitsmaschine aus. Besonders bei Maschinen, die in unterschiedlichen Einsatzverhältnissen mit unterschiedlichen Auslastungsgraden betrieben werden wie beispielsweise Feldhäcksler, wirken sich diese Nachteile besonders stark aus. So wird beim Ernten von Mais die volle Leistungsfähigkeit des Feldhäckslers ausgeschöpft, beim Einsatz in der Grasernte ist es jedoch aufgrund der wesentlich geringeren Erntegutmengen und abgeschalteten, nicht benötigten Aggregaten wie dem Körnerprozessor nicht möglich, die Maschine voll auszulasten. Da jedoch für die Funktionsfähigkeit des Häckselaggregates eine konstante Mindestdrehzahl erforderlich ist, wird der Feldhäcksler bei derartigen Einsatzfällen unwirtschaftlich mit einem viel zu hohen Treibstoffverbrauch betrieben. Ähnlich verhält es sich bei der Straßenfahrt. Auch bei dieser Betriebsart wäre ein wesentlich kleinerer Antriebsmotor völlig ausreichend, der einen geringeren Treibstoffverbrauch und auch günstigere Abgas- und Lärmemissionen verursacht.

Aus der DE 34 39 710 C2 ist eine landwirtschaftliche Zugmaschine bekannt, bei der ein Antriebsmotor über ein Sammelgetriebe und/oder über ein Nachschaltgetriebe zum Antrieb einer schaltbaren ersten Zapfwelle wirkt. Ein anbaubarer zweiter Motor ist über das Vorschaltgetriebe auf das Sammelgetriebe zuschaltbar, so dass die Leistung von Fahrantrieb und/oder der ersten Zapfwelle und/oder einer zweiten Zapfwelle erhöht werden kann. Das Vorschaltgetriebe verteilt die Leistung des zweiten Motors wahlweise über das Sammelgetriebe auf das Fahrgetriebe mit bzw. ohne erster und zweiter Zapfwelle oder allein auf die zweite Zapfwelle, wobei über das Nachschaltgetriebe die erste Zapfwelle und die zweite Zapfwelle gemeinsam vom zweiten Motor antreibbar sind. Nachteilig hierbei ist, dass durch die Anzahl der vorgesehenen Getriebeeinheiten ein enormer Bauaufwand zu betreiben ist und zudem ein Bauraum zur Verfügung gestellt werden muss, der bei den ohnehin schon voluminösen Erntemaschinen der hier interessierenden Art die Gesamtabmessungen einer Maschine erheblich vergrößert, wobei aufgrund der gesetzlichen Vorschriften hier Grenzen gesetzt sind. Die zur Zu- und Abschaltung von einzelnen Getrieben notwendigen Kupplungen müssen von der Bedienperson jeweils manuell zu- und weggeschaltet werden, was eine konzentrationsintensive Bedienarbeit mit einem damit einhergehenden Bedienfehlerrisiko beinhaltet. Zudem sind die einzelnen Getriebe an verschiedenen Orten zu platzieren, was eine erhebliche Anzahl von Verbindungselementen zur Übertragung der Antriebsenergie notwendig macht. Das kann sich auch nachteilig auf die Schwerpunktlage des Fahrzeuges auswirken.

Aus der DE 26 20 661 A1 ist ein landwirtschaftlicher Schlepper bekannt, der mindestens zwei Antriebsmotoren aufweist. Diese Antriebsmotoren sind unabhängig voneinander schaltbar und in Fahrzeuglängsrichtung nebeneinander angeordnet. Den beiden Antriebsmotoren ist ein gemeinsames Zahnradgetriebe mit Geradverzahnung zugeordnet, das mit den Ausgangswellen von beiden Motoren zu kuppeln ist. Dies ist über die Bedienperson des landwirtschaftlichen Schleppers zu vollziehen, so dass wiederum arbeits- und konzentrationsintensive Bedienarbeiten durchzuführen sind.

Durch die gattungsfremde DE 42 10 258 A1 wird ein Kraftfahrzeug, insbesondere ein Lastkraftwagen oder Omnibus mit einem Antriebsaggregat offenbart, welches zwei Motoren mit gleicher oder unterschiedlicher Bauart und Leistung aufweist. Den Motoren nachgeschaltet ist ein Summiergetriebe, das die von den zwei Motoren erzeugte Leistung aufnimmt und an die jeweiligen Verbraucher des Kraftfabrzeuges weitergibt. Aufgrund dieser Ausbildung des Antriebsaggregates ist die Auslegung und Gestaltung des den Motoren nachgeschalteten Getriebes mit hohen konstruktiven Aufwendungen und somit auch mit einem hohen Kostenaufwand verbunden, da die gesamte von den Motoren erzeugte Antriebsleistung bei hohen Eingangsdrehzahlen umzusetzen ist.

Es ist Aufgabe der vorliegenden Erfindung, eine besonders leistungsfähige selbstfahrende Erntemaschine der eingangs genannten Art bereitzustellen, bei der unter allen Betriebsbedingungen besonders wirtschaftlich und umweltfreundlich die Antriebseinrichtung zu betreiben ist und die darüber hinaus hinsichtlich ihrer Antriebseinrichtung einen möglichst kostengünstigen Gestehungsaufwand verursacht. Darüber hinaus soll die selbstfahrende Erntemaschine möglichst hedienerfreundlich ausgerüstet sein.

Zur Lösung dieser Aufgabe zeichnet sich die selbstfahrende Erntemaschine durch die ein Pantentanspruch 1 angegebenen Merkmale aus.

Die selbstfahrende landwirtschaftliche Arbeitsmaschine nach der Erfindung zeichnet sich zunächst durch ein Antriebsaggregat aus, welches für alle Betriebsarten und Einsatzverhältnisse möglichst energieverbrauchsgünstig und umweltverträglich die geforderte Antriebsleistung zur Verfügung stellt. Dies erfolgt durch die zumindest zwei Antriebsmotoren der Antriebseinheit, wobei bei dem Zwei- oder Mehrmotorenantrieb der Erntemaschine z.B. zwei baugleiche Dieselmotoren zum Einsatz kommen. Die Baugleichheit ist zwar nicht erforderlich, es vereinfacht aber wesentlich die Konstruktion, Auslegung und Fertigung und die spätere Wartung und Ersatzteilhaltung und ist somit insgesamt kostensparend. Ebenso bieten sich in erster Linie aus Kostengründen Dieselmotoren als Antriebsmotoren an, wobei jedoch auch alle anderen Arten und Kombinationen von Antriebsmotoren denkbar sind. Diese Motoren der Leistungsklasse, die bei einem Antrieb mit zwei Motoren zum Einsatz kommen, sind Großserienmotoren, die zusammen kostengünstiger sind als ein nur in kleineren Stückzahlen gefertigter Großmotor der oberen Leistungsklasse. Zu den Vorteilen bei den Anschaffungskosten einer Erntemaschine nach der Erfindung kommen jedoch noch ganz entscheidende zusätzliche Betriebskostenvorteile hinzu, die in erster Linie durch die im jeweiligen Einsatzspektrum angepaßte Antriebsleistung durch Auswahl der Anzahl der treibenden Motoren und damit einen optimierten Brennstoffverbrauch erzielt werden. Neben den reduzierten und durch Vermeidung von im Teillastbetrieb laufenden Antriebsmotoren sind auch optimierte Abgasemissionen zu erzielen. Bei der Straßenfahrt können Lärmemissionen erheblich reduziert werden.

In baulich kompakter Bauweise ist den zwei oder mehr Motoren ein gemeinsames Getriebe zugeordnet, sowie eine Steuer- und Regelvorrichtung, die die Art der Zuschaltung von Motoren steuert. Somit ist es möglich, die erfindungsgemäße Erntemaschine mit Mehrmotorenantrieb je nach anstehenden Betriebsbedingungen vorwählbar in allen Funktionen auch nur mit einem Hauptmotor zu betreiben. Derartige Betriebsbedingungen für den vorteilhaften Einsatz mit nur einem Motor sind beispielsweise die Straßenfahrt oder bei einem erfindungsgemäßen leistungsstarken Feldhäcksler der Einsatz bei der Grasbergung oder ähnlichen Einsatzfällen mit einer nur geringen Maschinenauslastung. Ändern sich die Einsatzbedingungen oder der Einsatzfall dahingehend, dass der allein antreibende Hauptmotor die leistungsbegrenzende Komponente der Arbeitsmaschine ist, so kann der Bediener der Arbeitsmaschine den Mehrmotorenantrieb wählen, um die gesamte Antriebsleistung der Antriebseinheit abzurufen und so die volle Leistungsfähigkeit der Maschine ausnutzen. Dazu ist bei der erfindungsgemäßen Erntemaschine eine Steuer- und Regeleinrichtung vorgesehen, über die der Ablauf der Zuschaltung des zumindest einen zusätzlichen Antriebsmotors gesteuert wird. Dies erfolgt nach Auslösung eines Signals für den gewünschten Mehrmotorenbetrieb durch die Bedienperson. Nicht zwingend erforderlich, aber nach einer bevorzugten Ausbildung der Erfindung aus Sicherheitsgründen festgelegte Grundvoraussetzung für den Ablaufstart der Motorenzuschaltung ist ein zuerst gestarteter, im Leerlauf laufender Hauptmotor und mindestens ein ebenfalls gestarteter, im Leerlauf laufender mit dem Hauptmotor zu koppelnder weiterer Motor. Der Hauptmotor wird vorzugsweise in vorbekannter Weise durch seinen Elektroanlasser gestartet. Der oder die weiteren Motoren können entweder ebenso oder jeweils durch einen eigenen Anlasser gestartet werden oder durch die Leistung des Hauptmotors. In verschiedenen Ausführungsformen ist beispielsweise denkbar, dass der Hauptmotor vorteilhaft bei niedriger Drehzahl nachschaltend in einer Kupplung den weiteren Motor anschleppt oder aber, dass durch eine den Hauptmotor angetriebene rotierende Masse kinetische Energie gespeichert wird und diese von der augenblicklichen Drehzahl des Hauptmotors unabhängig für den Start eines weiteren Motors genutzt wird.

Eine starre Kopplung von Antriebsmotoren bedingt eine sehr genaue, feinfühlige Synchronisation der Motoren, da die Motoren ansonsten gegeneinander arbeiten und auf die Antriebselemente zwischen den Motoren sehr große unerwünschte Kräfte wirken, die schnell zu Schäden führen können. Außerdem wird bei ungenügendem Gleichlauf der Motoren auf Grund der Energievernichtung innerhalb des Antriebes ein sehr schlechter Wirkungsgrad erzielt.

Besonders der Zeitpunkt der Kopplung der Motoren, vorzugsweise durch eine Reibkupplung ausgeführt, ist ein kritischer Augenblick, den es gilt, möglichst genau zu steuern.

Aus diesem Grund werden die Motoren erfindungsgemäß durch die Steuer- und Regeleinrichtung der Arbeitsmaschine nach Erfüllung der Startvoraussetzungen für den Mehrmotorenantrieb auf die obere Leerlaufdrehzahl hochgefahren, da in diesem Bereich ohnehin keine großen Drehzahlschwankungen vorhanden sind und die Motoren des weiteren in diesem Drehzahlbereich nur noch ein verhältnismäßig sehr geringes Drehmoment aufweisen und somit die Belastungen für die Antriebselemente bei der Kopplung minimiert werden.

Wenn die zu koppelnden Motoren dann im Bereich der oberen Leerlaufdrehzahl durch die Steuer- und Regeleinrichtung auf einen vorgegebenen möglichst genauen Gleichlauf gebracht worden sind, wird die Kopplung der Motoren durch das Zuschalten des mindestens einen zusätzlichen Antriebsmotors über eine Kupplung vollzogen.

Jetzt steht die gesamte Antriebsleistung der Antriebsmotoren sowohl für den Hauptantriebsstrang als auch für die Nebenabtriebe des Getriebes der Antriebseinheit zur Verfügung.

Sicherheitsschaltungen der Steuer- und Regeleinrichtung sorgen bei Störungen des sensorüberwachten Gleichlaufs der Motoren oder bei anderen Störungen, die ein Sicherheitsrisiko darstellen oder zu Schäden führen können, für eine sofortige geregelte Abschaltung zumindest des mindestens einen weiteren Antriebsmotors.

Die selbstfahrende landwirtschaftliche Arbeitsmaschine nach der Erfindung weist eine kompakte Antriebseinheit auf, die vorzugsweise hauptsächlich aus einer Drehbewegung übertragenden Einheit in Form eines Stirnradgetriebes und zwei daran direkt angeflanschten Dieselmotoren besteht und als komplette Antriebsbaugruppe so vormontierbar und in die Arbeitsmaschine einsetzbar ist. Als verbindendes und stabilisierendes Element dient dabei noch ein Hilfsrahmen, der die beiden parallel nebeneinander angeordneten Motoren an ihrem der Abtriebsseite und damit auch dem Getriebe gegenüberliegendem Kopfende starr miteinander verbindet. Außerdem ist der Hilfsrahmen ein verbindendes Element zwischen der Antriebseinheit und dem Rahmen der Arbeitsmaschine. Die entsprechende Verbindungsfunktion an der gegenüberliegenden Seite der Antriebseinheit wird von einem Stützbock am Getriebe übernommen. Elastische Befestigungselemente fixieren und sichern die Antriebseinheit.

Insgesamt stellt so die erfindungsgemäße Antriebseinheit, nach einer bevorzugten Ausführungsform eine Querverbindung zwischen den in Fahrzeuglängsrichtung verlaufenden Rahmenseitenträgern dar.

Vorteilhafterweise ist einer der Motoren der Antriebseinheit als Hauptmotor ausgebildet, von dem aus ein Hauptantriebsstrang der Arbeitsmaschine direkt über eine Kupplung zu- und abschaltbar ohne Kraftumleitung über das Getriebe antreibbar ist. Des weiteren treibt dieser Hauptmotor über Nebenabtriebe betriebsnotwendige Aggregate wie beispielsweise Lichtmaschine und Kühlerventilator an, was den Vorteil hat, dass deren Antrieb so konstruktiv einfach ist und sie nicht mehrfach vorhanden sein müssen. Alle weiteren Antriebe der Arbeitsmaschine gehen vom Getriebe der Antriebseinheit ab und sind ebenfalls durch den Hauptmotor antreibbar. In einer besonders vorteilhaften Ausführungsfonn einer Arbeitsmaschine nach der Erfindung sind die weiteren, über das Getriebe der Antriebseinheit angetriebenen Antriebe Hydraulikantriebe, wobei die Hydraulikpumpen der Antriebe direkt an dem Getriebe der Antriebseinheit angeflanscht sind.

Nachfolgend soll die Erfindung anhand einer Zeichnung eines Ausführungsbeispiels veranschaulicht werden.

Es zeigen:

| | |
|---|---|
| Fig. 1 | eine Seitenansicht eines Feldhäckslers als Beispiel einer erfindungsgemäßen selbstfahrenden landwirtschaftlichen Arbeitsmaschine mit teilweise freigelegter Antriebseinheit von links, |
| Fig. 2 | eine vergrößerte Detailansicht der freigelegten Antriebseinheit mit Nebenaggregaten nach Fig. 1, |
| Fig. 3 | eine Ansicht der freigelegten Antriebseinheit des erfindungsgemäßen Feldhäckslers des Ausführungsbeispiels von hinten, |
| Fig. 4 | eine der Fig. 2 entsprechende Detailansicht der Antriebseinheit von rechts, |
| Fig. 5 | eine perspektivische Ansicht der teilweise schematisch dargestellten Antriebseinheit des Feldhäckslers nach Fig. 1. |

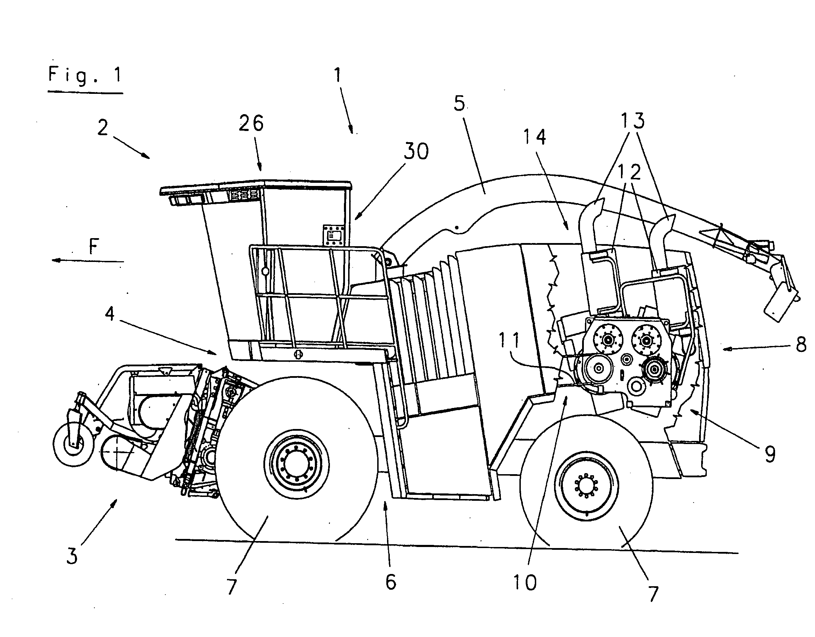

Die in Fig. 1 dargestellte selbstfahrende landwirtschaftliche Arbeitsmaschine 1 in diesem Ausführungsbeispiel ist ein grundsätzlich bekannter Feldhäcksler 2. Der nach den Merkmalen der Erfindung gestaltete Feldhäcksler 2 ist in der gezeigten Ausführung mit einer als Vorsatzgerät ausgebildeten Aufnahme- und Zuführeinrichtung 3 für vorzugsweise in Schwaden auf dem Boden liegendes Erntegut ausgerüstet. Das aufgenommene Erntegut wird dann einem nicht dargestellten Arbeitsaggregat 4 der Arbeitsmaschine 1 zur Zerkleinerung zugeführt und anschließend mittels des Auswurfkrümmers 5 vorzugsweise an ein Transportfahrzeug übergeben.

Die auf einem Fahrgestellrahmen 6 aufgebaute Arbeitsmaschine 1, welche sich gegen den Erdboden über Räder 7 abstützend selbstfahrend fortbeweglich ist, wird insgesamt durch eine Antriebseinheit 8 angetrieben. Sowohl der in diesem Fall hydraulische Fahrantrieb als auch die Antriebe für die Aufnahme- und Zuführeinrichtung 3 und für das Arbeitsaggregat 4 gehen von dieser Antriebseinheit 8 aus. Durch das teilweise Entfernen der Verkleidungen ist in Fig. 1 die teils nur schematisch dargestellte Antriebseinheit 8 als ein besonderes Merkmal der Erfindung erkennbar.

In der gezeigten Ansicht auf die, in Fahrtrichtung F gesehen, linke Maschinenseite sind besonders die Drehbewegung übertragende Einheit 9 und der von dieser abgehende Hauptantriebsstrang 10, welcher mittels eines Antriebsriemens 11 als Kraftübertragungsmittel hauptsächlich das Arbeitsaggregat 4 antreibt, sichtbar. Des weiteren sind zwei Abgasschalldämpfer 12 mit ihren Endrohren 13 als äußeres Erkennungszeichen für die zwei Antriebsmotoren 14 der Antriebseinheit 8 zu erkennen.

Durch die besonders vorteilhafte Anordnung dieser kompakten und schweren Antriebseinheit 8 noch hinter der Hinterachse des erfindungsgemäßen Feldhäckslers 2 wirkt diese als gewichtsausgleichende Masse zu den schweren Erntevorsätzen im Frontanbau. Ebenso ist in Fig. 1 die durch den Einsatz zweier kleiner Antriebsmotoren 14 ermöglichte niedrige Bauweise und die tiefe Einbaulage der Antriebseinheit 8 gut erkennbar. Dieses kommt vorteilhaft einem niedrigem Schwerpunkt und damit der Standsicherheit und der Fahrstabilität zugute.

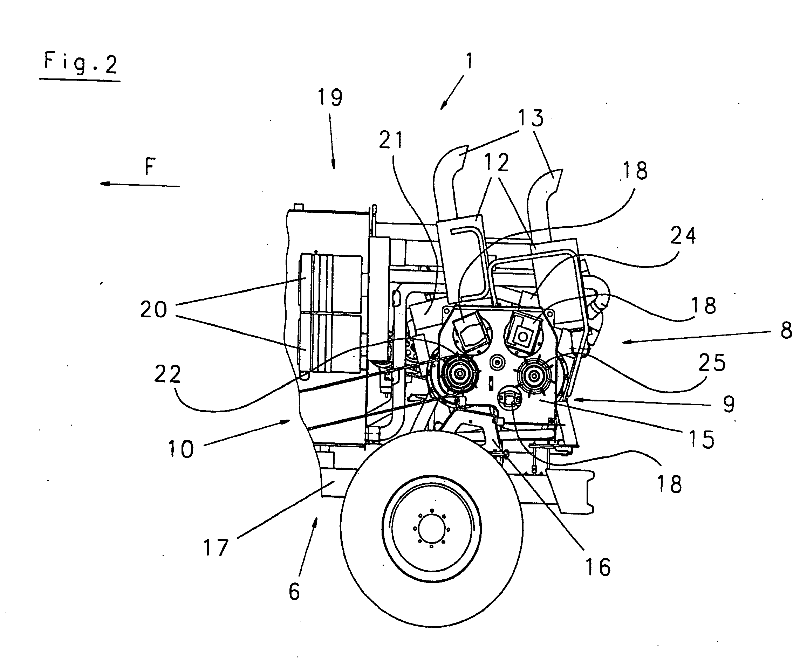

Fig. 2 zeigt im Detail den hinteren Bereich des Feldhäckslers ohne Verkleidungen in gleicher Ansicht wie Fig. 1. Die in diesem Ausführungsbeispiel als Stirnradgetriebe 15 ausgebildete Drehbewegung übertragende Einheit 9 der Antriebseinheit 8 ist mittels einem Stützbock 16 mit dem linken Rahmenseitenträger 17 des Fahrgestellrahmens 6 verbunden. Die in der Zeichnung insgesamt starr dargestellte Verbindung zwischen der Antriebseinheit 8 und dem Fahrgestellrahmen 6 ist in einer weiteren Ausführungsform auch elastisch durch beispielsweise Gummi-Metall-Verbindungselemente denkbar. Neben dem Hauptantriebsstrang 10 sind in der Fig. 2 auch die direkt am Stirnradgetriebe 15 angeflanschten Hydraulikpumpen 18 der weiteren Antriebe des Feldhäckslers ebenso wie die Kühleinheit 19 und die Luftfilter 20 sichtbar.

Der Hauptantriebsstrang 10 wird über einen direkten Durchtrieb durch das Stirnradgetriebe 15 vom Hauptmotor 21 der beiden Antriebsmotoren 14 angetrieben und ist dabei durch eine Kupplung 22 zu- und abschaltbar. Der Hauptmotor 21 ist jedoch auch im ständigen Eingriff mit dem Stirnradgetriebe 15 und damit auch mit den direkt am Stirnradgetriebe 15 angeflanschten Hydraulikpumpen 18.

Des weiteren werden vom Hauptmotor 21 alle für seinen und für den Betrieb der Arbeitsmaschine 1 notwendigen Nebenaggregate, auf die später noch näher eingegangen wird, angetrieben. Somit ist nach der Erfindung der Betrieb der mehrmotorigen Arbeitsmaschine 1 alleinig mit dem Hauptmotor 21 möglich.

Der mindestens eine weitere Antriebsmotor 23, in diesem Ausführungsbeispiel als Nebenmotor 24 bezeichnet, weil es sich nur um einen weiteren Motor handelt, ist über eine ebenfalls in Fig. 2 sichtbare Kupplung 25 zuschaltbar. Nach erfolgtem Kuppelvorgang befindet sich der Nebenmotor 24 ebenfalls im Eingriff mit dem Stirnradgetriebe 15, der Antriebseinheit 8 und damit in starr gekoppelter Verbindung zum Hauptmotor 21, womit die gesamte Leistung beider Motoren 21,24 für alle vom Stirnradgetriebe 15 abgehenden Antriebe 10,18 zur Verfügung steht. Da die beiden Antriebsmotoren 21,24 im Ausführungsbeispiel baugleich sind, ist es somit möglich, den erfindungsgemäßen Feldhäcksler 2 entweder nur durch den Hauptmotor 21 mit halbierter Antriebsleistung anzutreiben, oder aber mit zusätzlich zugeschaltetem Nebenmotor 24 mit der vollen Gesamtantriebsleistung der Antriebseinheit 8 zu betreiben.

Die Kühleinheit 19 der Arbeitsmaschine 1 umfasst zentral zusammengefasst sämtliche Kühler für Wasser, Öl, Ladeluft und Kühlmittel der Antriebsmotoren 14, der Hydrauliksysteme, sowie der Klimaanlage der Fahrerkabine 26.

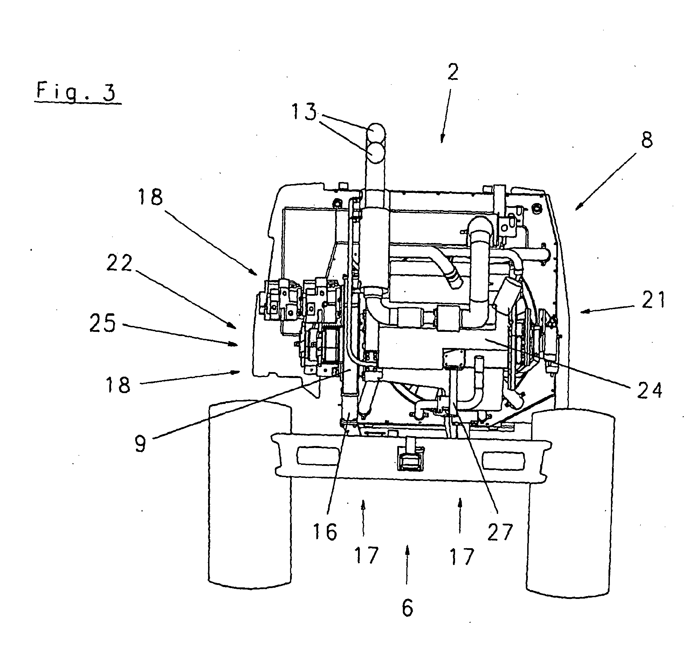

In der Ansicht des Feldhäckslers 2 von hinten, sowie in Fig. 3 teilweise schematisch und ohne Maschinenverkleidungen gezeigt, ist ebenfalls gut zu erkennen, wie kompakt die Antriebseinheit 8 der Arbeitsmaschine gemäß der Erfindung aufgebaut ist und sich dadurch in vorteilhafter Schwerpunktlage in die Arbeitsmaschine 1 einfügen lässt. Außer dem bereits erwähnten Stützbock 16 ist der Hilfsrahmen 27 erkennbar. Der Hilfsrahmen 27 verbindet einerseits annähernd kopfseitig die Motoren 21,24 starr miteinander und bildet andererseits nach dem Stützbock 16 das zweite Verbindungselement der Antriebseinheit 8 mit dem Fahrgestellrahmen 6 des Feldhäckslers 2.

Durch das direkte Anflanschen der Antriebsmotoren 14 an der einen Seite der Drehbewegung übertragenden Einheit 9 und dem direkten Anbau der Kupplungen 22,25 und der Hydraulikpumpen 18 an der gegenüberliegenden Seite, ist erfindungsgemäß eine vormontagefähige Antriebseinheit 8 für eine Arbeitsmaschine 1 zur Verfügung gestellt, die aufgrund ihrer Kompaktheit sehr vorteilhaft quer eingebaut werden kann und so praktisch eine Verbindung zwischen den Rahmenseitenträgern 17 herstellt. Die sehr gute Zugängigkeit der Baugruppen und die bereits erwähnte günstige Schwerpunktlage der Antriebseinheit sind nur durch diese vorteilhafte Bauweise erreichbar.

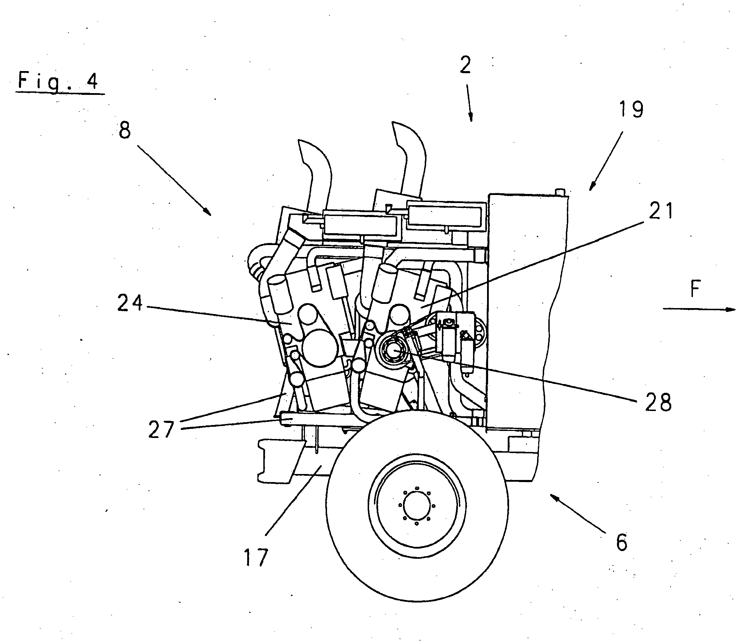

Fig. 4 zeigt den Heckbereich des Feldhäckslers 2 entsprechend Fig. 2 von der gegenüberliegenden rechten Maschinenseite. In dieser Ansicht kopfseitig auf die Motoren 21, 24 ist der Hilfsrahmen 27 als verbindendes und abstützendes Element der Antriebseinheit 8 gut zu erkennen. Des weiteren ist zu erkennen, dass der Nebenantrieb 28 für die Nebenaggregate Kühllüfter und Generator, die hier nicht dargestellt sind, nur vom in Fahrtrichtung F vorne liegenden Hauptmotor 21 abgeht. In einer anderen Ausführungsform ist auch vorstellbar, dass alle Aggregate wahlweise von jedem Motor angetrieben werden können, so dass es keinen Hauptmotor gibt. Die beschriebene Ausführungsform ist jedoch insbesondere aus der Kostensicht sehr vorteilhaft, da so weitere Aggregate, Antriebselemente und aufwändige Steuerungen eingespart werden.

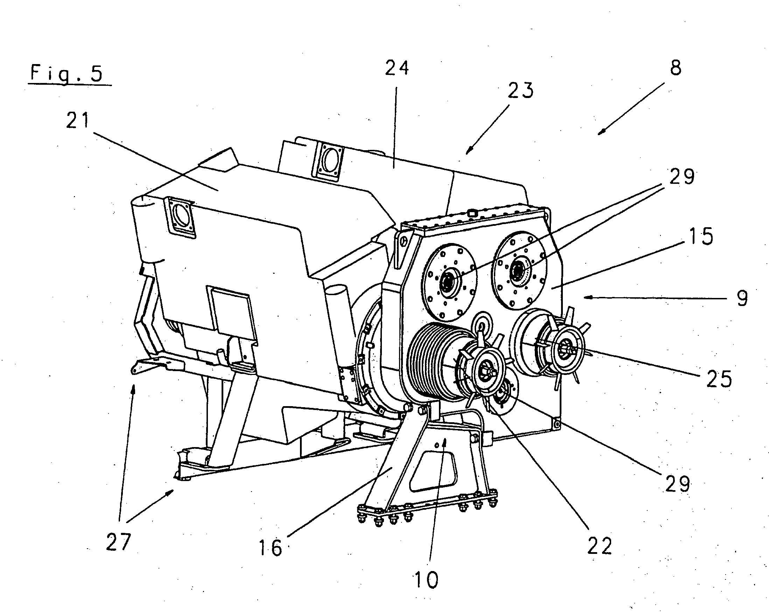

Fig. 5 zeigt in einer perspektivischen, teilweise schematischen Darstellung die Antriebseinheit 8 des Feldhäckslers 2 nach der Erfindung mit den Baugruppen Hauptmotor 21, Nebenmotor 24, Stirnradgetriebe 15, Stützbock 16, Hilfsrahmen 27 und Kupplungen 22, 25. An den Antrieben 29 des Stirnradgetriebes 15 sind in dieser Darstellung die Hydraulikpumpen 18 nicht montiert. Die Fig. 5 macht nochmals besonders deutlich, wie durch die Merkmale der Erfindung unter anderem eine vormontagefähige kompakte Antriebseinheit 8 für eine selbstfahrende landwirtschaftliche Arbeitsmaschine 1 geschaffen wurde, die in diesem Ausführungsbeispiel anhand eines Feldhäckslers 2 gezeigt wird. Besonders gut erkennbar ist ebenfalls die derart vorteilhafte Anordnung des Hauptmotors 21, dass dieser den durch die Kupplung 22 schaltbaren Hauptantriebsstrang 10 im direkten Kraftfluss ohne Umleitung über die Drehbewegung übertragende Einheit 9 antreibt, wobei gleichzeitig die Möglichkeit besteht, dem Hauptantriebsstrang 10 die Antriebsleistung mindestens eines weiteren Motors 23 zuzuschalten. Das Koppeln der im Ausführungsbeispiel beiden Motoren 21 und 24 geschieht durch die Kupplung 25. Die Kupplung 25 stellt den Kraftschluss zwischen dem Nebenmotor 24 und dem Stirnradgetriebe 15 und damit auch zwischen den Motoren 21 und 24 her. Um im Augenblick der Kopplung die Belastungen sowohl für die Kupplung 25 als auch für die Bauelemente des Stirnradgetriebes 15 so gering wie möglich zu halten, sind für den Koppelvorgang Voraussetzungen bezüglich des Gleichlaufs der Motoren 21,24 notwendig.

Stellt der Bediener des erfindungsgemäßen Feldhäckslers 2 während des Arbeitseinsatzes nur mit Antrieb durch den Hauptmotor 21 fest, dass die Antriebsleistung nicht ausreichend ist bzw. steht bereits vor Beginn des Arbeitseinsatzes fest, dass mit beiden Motoren 21,24 gearbeitet werden soll, so muss zuerst der Hauptmotor 21 und dann der Nebenmotor 24 gestartet werden.

Beim Feldhäcksler 2 des Ausführungsbeispiels wird der Nebenmotor 24 in üblicher Weise durch seinen nicht dargestellten Elektroanlasser gestartet. In weiteren Ausführungsformen ist aber auch beispielsweise denkbar, dass der Hauptmotor 21 vorzugsweise bei niedriger Drehzahl bei Betätigung der Kupplung 25 den Nebenmotor 24 anschleppt, oder aber das eine durch den Hauptmotor 21 in Rotation versetzbare Masse kinetische Energie speichert und diese von der augenblicklichen Drehzahl des Hauptmotors 21 unabhängig für den Start des Nebenmotors 24 genutzt werden kann. Jetzt gibt der Bediener das Startsignal für den Mehrmotorenantrieb an die Steuer- und Regeleinheit 30 der Arbeitsmaschine 1, woraufhin diese die Motoren 21,24 derart regelt, dass sie bezüglich der Drehzahl möglichst synchron laufen. Erst wenn ein Gleichlauf innerhalb einer vorgegebenen Toleranz erreicht ist, wird die Kupplung 25 geschaltet und damit die Kopplung vollzogen. Vorzugsweise liegt die angestrebte Synchrondrehzahl bei der oberen Leerlaufdrehzahl, da diese bereits relativ identisch ist und in diesem Drehzahlbereich aufgrund der nur noch geringen Drehmomente der Motoren 21,24 die Drehmomentunterschiede ebenfalls sehr gering sind. In weiteren Ausführungsformen sind auch andere Synchronisierungsmöglichkeiten und andere Synchronisierungsdrehzahlen oder ganz andere technische Lösungen beispielsweise mit Freiläufen denkbar. Die geringe Bauteilbelastung, die Betriebsicherheit und die Kosten sprechen jedoch für die vorteilhafte Lösung der Ausführungsform.

Die Steuer- und Regeleinrichtung 30 der Arbeitsmaschine nach der Erfindung hat außerdem noch Überwachungs- und Sicherheitsfunktionen. Sie ist derart eingerichtet, dass kleinste durch Sensoren erfasste Störungen der Antriebseinheit 8 die ein Sicherheitsrisiko darstellen könnten oder zu Schäden führen könnten sofort zumindest zu einem kontrollierten Abschalten des Nebenmotors 24 und/oder zum Schalten mindestens einer der Kupplungen 22,25 führt.

## Patentansprüche

1. Selbstfahrende Erntemaschine (1), insbesondere Feldhäcksler zum Aufnehmen und Häckseln von Erntegut wie Mais, Grüngut oder dgl. mit einem Fahrgestell, dessen Fahrgestellrahmen sich über Antriebsräder (7) auf den Boden abstützt, mit einem Fahrantrieb und zumindest einen Antrieb für zumindest ein angetriebenes Arbeits- oder Ernteaggregat, wie eine Gutaufnahme- und -zuführeinrichtung (3), ein Arbeitsaggregat zur Zerkleinerung, einen Auswurfkrümmer (5) für die Gutübergabe, wobei eine variable Gesamtantriebsleistung für sämtliche Antriebe von einer Antriebseinheit (8) bereitgestellt wird, die zumindest zwei Antriebsmotoren (14) umfasst und deren zumindest zwei Antriebsmotoren (14) mindestens eine eine Drehbewegung übertragene gemeinsame Getriebeeinheit (9) zugeordnet ist, mit einer Steuer- und Regeleinrichtung (30), über die der Ablauf für die Zuschaltung von zumindest einem zusätzlichen Antriebsmotor steuerbar ist, wobei von den zumindest zwei Antriebsmotoren (14) ein Antriebsmotor den Hauptmotor bildet und ein Hauptantriebsstrang (10) der Erntemaschine direkt von dem Hauptmotor (21) angetrieben wird, wobei der weitere Antriebsmotor (23) wahlweise zugeschaltet werden kann, wobei nach einem Startsignal für den Mehrmotorenbetrieb durch den Bediener die Steuer- und Regeleinrichtung (30) die Motoren (21, 23, 24) derart regelt, dass sie bezüglich der Drehzahl möglichst synchron laufen, so dass wenn ein Gleichlauf innerhalb einer vorgegebenen Toleranz erreicht ist, eine Kupplung zugeschaltet und damit die Kopplung der Motoren (21, 23, 24) vollzogen wird.

2. Selbstfahrende Erntemaschine nach Anspruch 1, **dadurch gekennzeichnet, dass** die Antriebseinheit (8) eine kompakte vormontagefähige Baugruppe bildet.

3. Selbstfahrende Erntemaschine nach Anspruch 2, **dadurch gekennzeichnet, dass** ein IIilfsrahmen (27) die Antriebsmotoren (14) kopfseitig gegenüberliegend der Verbindung mit der Drehbewegung übertragenden Einheit (9) starr verbindet.

4. Selbstfahrende Erntemaschine nach einem der Ansprüche 1 bis 3, **dadurch gekennzeichnet, dass** die Antriebseinheit (8) ein verbindendes Element der Rahmenseitenträger (17) des Fahrgestellrahmens (6) der selbstfahrenden landwirtschaftlichen Arbeitsmaschine (1) bildet.

5. Selbstfahrende Erntemaschine nach Anspruch 3 und 4, **dadurch gekennzeichnet, dass** die Antriebseinheit (8) ein verbindendes Element von Rahmenseitenträgern 17 des Fahrgestellrahmens (6) der selbstfahrenden Erntemaschine (1) bildet, wobei der IIilfsrahmen (27) einerseits mit einem Rahmenseitenträger (17) und ein Stützbock (16) der Drehbewegung übertragenden Einheit (9) andererseits mit einem weiteren Rahmenseitentrager (17) schwingungsdämpfend lösbar fixiert und verbunden sind.

6. Selbstfahrende Erntemaschine nach einem der Ansprüche 1 bis 5, **dadurch gekennzeichnet, dass** jeder Antriebsmotor (14) für sich separate, für seinen Betrieb notwendige Ver- und Entsorgungscinrichtungen aufweist, wobei ein Kraftstofftank und ein Luftfilter gemeinsam nutzbar sind.

7. Selbstfahrende Erntemaschine nach einem der vorangehenden Ansprüche, **dadurch gekennzeichnet, dass** für die Antriebsmotoren (14) der Antriebseinheit (8) ein gemeinsames Kühlsystem vorgesehen ist.

8. Selbstfahrende Erntemaschine nach einem der vorangehenden Ansprüche, **dadurch gekennzeichnet, dass** das gemeinsame Kühlsystem der Antriebsmotoren (14) der Antriebseinheit (8) derart ausgebildet ist, dass bei alleinigem Betrieb des Hauptmotors (21) durch dessen Abwärme eine Vorwärmung von mindestens einem weiteren Antriebsmotor (23) erfolgt.

9. Selbstfahrende Erntemaschine nach einem der Ansprüche 1 bis 8, **dadurch gekennzeichnet, dass** die Drehbewegung übertragende Einheit (9) als Stirnradgetriebe oder als Planetengetriebe ausgebildet ist.

10. Selbstfahrende Erntemaschine nach einem der Ansprüche 1 bis 9, **dadurch gekennzeichnet, dass** die Antriebsmotoren (14) der Antriebseinheit (8) abtriebsetig mit der Drehbewegung übertragenden Einheit gehäuseverbindend eine trennbare Einheit bilden.

11. Selbstfahrende Erntemaschine nach einem der Ansprüche 1 bis 10, **dadurch gekennzeichnet, dass** sich einer der Antriebsmotoren im ständigen Eingriff mit der Drehbewegung übertragenden Einheit (9) befindet.

12. Selbstfahrende Erntemaschine nach einem der Ansprüche 1 bis 11, **dadurch** gekennzeichnct, dass alle Antriebe der Erntemaschine (1) von einem der Antriebsmotoren (14) antreibbar sind.

13. Selbstfahrende Erntemaschine nach einem der Ansprüche 1 bis 12, **dadurch gekennzeichnet, dass** die Antriebsleistung für Kühleinrichtungen und ein Generatorbetrieb nur von einem der Antriebsmotoren (21) zur Verfügung gestellt werden.

14. Selbstfahrende Erntemaschine nach einem der Ansprüche 1 bis 13, **dadurch gekennzeichnet, dass** der Hauptantriebsstrang (10) schaltbar antreibbar ist.

15. Selbstfahrende Erntemaschine nach einem der Ansprüche 1 bis 14, **dadurch gekennzeichnet, dass** der Hauptantriebsstrang (10) gemeinsam vom Hauptmotor (21) und mindestens einem weiteren Antriebsmotor (23) antreibbar ist.

16. Selbstfahrende Erntemaschine nach einem der vorhergehenden Ansprüche, **dadurch gekennzeichnet, dass** weitere Antriebe der Erntemaschine (1) von der Drehbewegung übertragenden Einheit (9) abgehen.

17. Selbstfahrende Erntemaschine nach einem der vorangehenden Ansprüche, **dadurch gekennzeichnet, dass** sämtliche von der Drehbewegung übertragenden Einheit (9) abgehenden Antriebe gemeinsam von allen Antriebsmotoren (14) antreibbar sind.

18. Selbstfahrende Erntemaschine nach einem der vorangehenden Ansprüche, **dadurch gekennzeichnet, dass** Steuer- und Regeleinrichtungen (30) vorgesehen sind, um zwischen den koppelbaren Antriebsmotoren (14) der Antriebseinheit (8) einen Zustand des Gleichgewichtes bezüglich Ausgangsdrehmoment und Motordrehzahl herzustellen.

19. Selbstfahrende Erntemaschine nach einem der vorangehenden Ansprüche, **dadurch gekennzeichnet, dass** Steuer- und Regeleinrichtungen (30) vorgesehen sind, um nach einem Auslösesignal automatisch die für die Kopplung der Antriebsmotoren (14) notwendigen Bedingungen herzustellen und die Kopplung vorzunehmen.

20. Selbstfahrende Erntemaschine nach einem der vorangehenden Ansprüche, **dadurch gekennzeichnet, dass** Steuer- und Regeleinrichtungen (30) vorgesehen sind, den Betriebszustand und das Zusammenspiel der Antriebsmotoren (14) der Antriebseinheit derart zu überwachen, dass bei Störungen sofort entsprechende Maßnahmen zur Vermeidung von Unfällen und Schäden eingeleitet werden.

21. Selbstfahrende Erntemaschine nach Anspruch 20, **dadurch gekennzeichnet, dass** die Steuer- und Regeleinrichtungen (30) derart eingerichtet sind, dass sie den Betriebszustand und das Zusammenspiel der Antriebsmotoren (14) derart überwachen, dass bei Störungen zumindest sofort eine Trennung des Kraftflusses des zumindest einen weiteren Motors (23) von der Drehbewegung übertragenden Einheit (9) durch eine Kupplung (25) erfolgt.

22. Selbstfahrende Erntemaschine nach einem der vorangehenden Ansprüche, **dadurch gekennzeichnet, dass** die Nutzungsart und/oder die Einsatzverhältnisse die Anzahl der treibenden Antriebsmotoren (14) der Antriebseinheit (8) bestimmt.

23. Selbstfahrende Erntemaschine nach Anspruch 22, **dadurch gekennzeichnet, dass** in der Betriebsart der Straßenfahrt nur ein Antriebsmotor (14) der Antriebseinheit (8) die Erntemaschine (1) antreibt.

## Claims

1. Self-propelled harvester (1), and in particular a forage harvester, for picking up and chopping harvested crops such as maize, green forage or the like, having a chassis whose frame is supported on the ground by means of drive wheels (7), having a travel drive and at least one drive for at least one driven working or harvesting sub-unit such as an arrangement (3) for picking up and feeding in crop, a working sub-unit for comminution, or a discharge chute (5) for transferring the crop, variable overall driving power for all the drives being supplied by a drive unit (8) which comprises at least two driving engines (14) and whose at least two driving engines (14) have associated with them at least one common gearbox unit (9) which transmits a rotary movement, and having a control and regulating means (30) by means of which the sequence for the start-up of at least one additional driving engine can be controlled, wherein of the at least two driving engines (14), one driving engine forms the main engine, and a main drive train (10) of the harvester is driven directly by the main engine (21), wherein the additional driving engine (23) can be selectively activated, wherein, following a start signal for multi-engine operation by the operator, the control and regulating means (30) controls the engines (21, 23, 24) in such a way that they run as synchronously as possible in terms of speed such that, if synchronisation is achieved within a predetermined tolerance, a clutch is engaged and the engines (21, 23, 24) are coupled.

2. Self-propelled harvester according to claim 1, **characterised in that** the drive unit (8) forms a compact sub-assembly able to be pre-assembled.

3. Self-propelled harvester according to claim 2, **characterised in that** an auxiliary frame (27) rigidly connects the driving engines (14) at the head end, opposite the connection to the unit (9) which transmits rotary movement.

4. Self-propelled harvester according to one of claims 1 to 3, **characterised in that** the drive unit (8) forms a connecting element for the side-beams (17) of the frame (6) of the chassis of the self-propelled agricultural harvester (1).

5. Self-propelled harvester according to claims 3 and 4, **characterised in that** the drive unit (8) forms a connecting element for the side-beams (17) of the frame (6) of the chassis of the self-propelled agricultural harvester (1), the auxiliary frame (27) being detachably fixed and connected, in such a way as to damp vibrations, on the one hand to a side-beam (17) of the frame and a support mounting (16) of the unit (9) which transmits rotary movement, and on the other hand to a further side-beam (17) of the frame.

6. Self-propelled harvester according to one of claims 1 to 5,**characterised in that** each driving engine (14) has supply and exhaust facilities which are, in themselves, separate and which are required for its operation, a fuel tank and an air filter being able to be used in common.

7. Self-propelled harvester according to one of the foregoing claims, **characterised in that** a common cooling system is provided for the driving engines (14) of the drive unit (8).

8. Self-propelled harvester according to one of the foregoing claims, **characterised in that** the common cooling system of the driving engines (14) of the drive unit (8) is so designed that, when the main engine (21) alone is operating, at least one further driving engine (23) is pre-heated by the waste heat from it.

9. Self-propelled harvester according to one of claims 1 to 8, **characterised in that** the unit (9) which transmits rotary movement takes the form of a spur-gear gearbox or a planetary gearbox.

10. Self-propelled harvester according to one of claims 1 to 9, **characterised in that**, at the output end, the driving engines (14) of the drive unit (8) form a separable unit with the unit which transmits rotary movement by a connection of housings.

11. Self-propelled harvester according to one of claims 1 to 10, **characterised in that** one of the driving engines is in constant engagement with the unit (9) which transmits rotary movement.

12. Self-propelled harvester according to one of claims 1 to 11, **characterised in that** all the drives of the harvester (1) can be driven by one of the driving engines (14).

13. Self-propelled harvester according to one of claims 1 to 12, **characterised in that** the power for driving cooling facilities and for generator operation is supplied by only one of the driving engines (21).

14. Self-propelled harvester according to one of claims 1 to 13, **characterised in that** the main drive train (10) can be driven switchably.

15. Self-propelled harvester according to one of claims 1 to 14, **characterised in that** the main drive train (10) can be driven by the main engine (21) and at least one further driving engine (23) operating in unison.

16. Self-propelled harvester according to one of the foregoing claims, **characterised in that** further drives of the harvester (1) are driven from the unit (9) which transmits rotary movement.

17. Self-propelled harvester according to one of the foregoing claims, **characterised in that** all the drives which are driven from the unit (9) which transmits rotary movement can be driven by all the driving engines (14) in unison.

18. Self-propelled harvester according to one of the foregoing claims, **characterised in that** control and regulating means (30) are provided to establish a state of balance in respect of output torque and engine speed between the driving engines (14) of the drive unit (8) which can be coupled together.

19. Self-propelled harvester according to one of the foregoing claims, **characterised in that** control and regulating means (30) are provided in order, following a triggering signal, to automatically bring about the conditions required for the coupling together of the driving engines (14) and to automatically perform the coupling together.

20. Self-propelled harvester according to one of the foregoing claims, **characterised in that** control and regulating means (30) are provided to monitor the state of operation of and the interaction between the driving engines (14) of the drive unit in such a way that, if faults occur, appropriate steps to avoid accidents and damage are at once initiated.

21. Self-propelled harvester according to claim 20, **characterised in that** the control and regulating means (30) are so designed that they monitor the state of operation of and the interaction between the driving engines (14) in such a way that, if faults occur, at least a cutoff of the flow of power from the at least one further engine (23) to the unit (9) which transmits rotary motion is at once performed by a clutch (25).

22. Self-propelled harvester according to one of the foregoing claims, **characterised in that** the nature of the use and/or the conditions of use determine the number of driving engines (14) of the drive unit (8) which are actually driving.

23. Self-propelled harvester according to claim 22, **characterised in that**, in the mode of operation for travel in the road, only one driving engine (14) of the drive unit (9) drives the harvester (1).

## Revendications

1. Récolteuse automotrice (1) notamment ramasseuse-hacheuse pour ramasser et hacher des produits de récolte tels que du maïs, des produits verts ou analogues, avec un châssis dont le bâti s'appuie sur le sol par des roues motrices (7), avec un entraînement de déplacement et au moins un entraînement pour au moins une unité entraînée de travail ou de récolte telle qu'une installation de ramassage et de transfert de produits (3), une unité de travail pour hacher, une goulotte d'éjection (5) pour transférer les produits, une puissance motrice totale variable étant fournie à tous les entraînements d'une unité d'entraînement (8) qui comporte au moins deux moteurs d'entraînement (14) et dont les au moins deux moteurs d'entraînement (14) sont associés à une unité de transmission (9) commune transmettant un mouvement de rotation, et avec une installation de commande et de régulation (30) par laquelle se commande la mise en service d'au moins un moteur d'entraînement supplémentaire (23),
dans laquelle, parmi au moins les deux moteurs d'entraînement (14), un moteur constitue le moteur principal (21) et une ligne de transmission principale (10) de la récolteuse est entraînée directement par le moteur principal (21), l'autre moteur d'entraînement (23) peut être branché en plus sélectivement et, après que l'utilisateur a donné un signal de démarrage pour le fonctionnement à plusieurs moteurs, l'installation de commande et de régulation (30) régule les moteurs (21, 23, 24) de telle sorte qu'ils tournent de la manière la plus synchrone possible quant à leur vitesse de rotation de sorte que, lorsqu'un synchronisme est atteint dans les limites d'une tolérance prédéterminée, un embrayage est enclenché et le couplage des moteurs (21, 23, 24) est ainsi réalisé.

2. Récolteuse automotrice selon la revendication 1,
**caractérisée en ce que** l'unité d'entraînement (8) constitue un ensemble compact, susceptible d'être pré-assemblé.

3. Récolteuse automotrice selon la revendication 2,
**caractérisée en ce qu'**un cadre auxiliaire (27) relie rigidement les moteurs d'entraînement (14), du côté de la tête, à l'opposé de la liaison avec l'unité (9) transmettant le mouvement de rotation.

4. Récolteuse automotrice selon l'une des revendications 1 à 3,
**caractérisée en ce que** l'unité d'entraînement (8) constitue un élément de liaison de la poutre latérale (17) du châssis de roulement (6) de la machine agricole automotrice (1).

5. Récolteuse automotrice selon les revendications 3 et 4,
**caractérisée en ce que** l'unité d'entraînement (8) constitue un élément de liaison des poutres latérales (17) du châssis de roulement (6) de la récolteuse automotrice (1), et d'une part le châssis auxiliaire (27) est relié et fixé de manière amovible à une poutre latérale de châssis (17) et d'autre part un bloc d'appui (16) de l'unité (9) transmettant le mouvement de rotation est relié et fixé de manière amovible à une autre poutre latérale de châssis (17) de manière à amortir les vibrations.

6. Récolteuse automotrice selon l'une des revendications 1 à 5,
**caractérisée en ce que** chaque moteur d'entraînement (14) comporte séparément les installations d'alimentation et d'évacuation nécessaires à son fonctionnement, un réservoir de carburant et un filtre à air étant communs.

7. Récolteuse automotrice selon l'une des revendications précédentes,
**caractérisée en ce que** les moteurs d'entraînement (14) de l'unité d'entraînement (8) ont un système de refroidissement commun.

8. Récolteuse automotrice selon l'une des revendications précédentes,
**caractérisée en ce que** le système de refroidissement commun des moteurs d'entraînement (14) de l'unité d'entraînement (8) est réalisé pour que le seul fonctionnement du moteur principal (21) dégage de la chaleur permettant de préchauffer au moins un autre moteur d'entraînement (23).

9. Récolteuse automotrice selon l'une des revendications 1 à 8,
**caractérisée en ce que** l'unité (9) transmettant le mouvement de rotation est constituée par une transmission à pignons droits ou une transmission planétaire.

10. Récolteuse automotrice selon l'une des revendications 1 à 9,
**caractérisée en ce que** les moteurs d'entraînement (14) de l'unité d'entraînement (8) constituent du côté de la sortie, avec l'unité transmettant le mouvement de rotation, une unité séparable et reliant l'ensemble.

11. Récolteuse automotrice selon l'une des revendications 1 à 10,
**caractérisée en ce que** l'un des moteurs d'entraînement est en prise permanente avec l'unité (9) transmettant le mouvement de rotation.

12. Récolteuse automotrice selon l'une des revendications 1 à 11,
**caractérisée en ce que** tous les moyens d'entraînement de la récolteuse (1) peuvent être entraînés par l'un des moteurs (14).

13. Récolteuse automotrice selon l'une des revendications 1 à 12,
**caractérisée en ce que** la puissance motrice pour des installations de refroidissement et le fonctionnement en générateur ne sont assurés que par l'un des moteurs d'entraînement (21).

14. Récolteuse automotrice selon l'une des revendications 1 à 13,
**caractérisée en ce que** la ligne d'entraînement principale (10) peut être entraînée de façon commutable.

15. Récolteuse automotrice selon l'une des revendications 1 à 14,
**caractérisée en ce que** la ligne de transmission principale (10) est entraînée en commun par le moteur principal (21) et au moins un autre moteur (23).

16. Récolteuse automotrice selon l'une des revendications précédentes,
**caractérisée en ce que** d'autres entraînements de la récolteuse (1) sont issus de l'unité (9) transmettant le mouvement de rotation.

17. Récolteuse automotrice selon l'une des revendications précédentes,
**caractérisée en ce que** tous les entraînements partant de l'unité (9) transmettant le mouvement de rotation peuvent être entraînés en commun par tous les moteurs d'entraînement (14).

18. Récolteuse automotrice selon l'une des quelconques revendications,
**caractérisée en ce que** des installations de commande et de régulation (30) sont prévues pour réaliser un état d'équilibre pour le couple fourni et la vitesse de rotation entre les moteurs d'entraînement pouvant être accouplés (14) de l'unité d'entraînement (8).

19. Récolteuse automotrice selon l'une des revendications précédentes,
**caractérisée en ce que** des installations de commande et de régulation (30) sont prévues pour, après un signal de déclenchement, assurer automatiquement les conditions nécessaires à l'accouplement des moteurs d'entraînement (14) et effectuer cet accouplement.

20. Récolteuse automotrice selon l'une des revendications précédentes,
**caractérisée en ce que** des installations de commande et de régulation (30) sont prévues pour surveiller l'état de fonctionnement et la coopération des moteurs d'entraînement (14) de l'unité d'entraînement pour qu'en cas de perturbation, des mesures appropriées soient prises immédiatement pour éviter des accidents et les dommages.

21. Récolteuse automotrice selon la revendication 20,
**caractérisée en ce que** les installations de commande et de régulation (30) sont conçues pour surveiller l'état de fonctionnement et la coopération des moteurs d'entraînement (14) pour qu'en cas de perturbation, au moins immédiatement le flux de force de l'au moins un autre moteur (23) soit coupé, par un embrayage (25), de l'unité (9) qui transmet le mouvement de rotation.

22. Récolteuse automotrice selon l'une des revendications précédentes,
**caractérisée en ce que** la nature d'utilisation et/ou les conditions d'utilisation définissent le nombre de moteurs (14) utilisés pour l'entraînement dans l'unité d'entraînement (8).

23. Récolteuse automotrice selon les revendications 22,
**caractérisée en ce que**, pour le mode de fonctionnement correspondant à la circulation sur route, un seul moteur (14) de l'unité d'entraînement (8) entraîne la récolteuse (1).
